(19)

Europäisches
Patentamt

European
Patent Office

Office européen
des brevets

(11) **EP 4 733 923 A1**

(12) **EUROPEAN PATENT APPLICATION**

(43) Date of publication:
**29.04.2026 Bulletin 2026/18**

(21) Application number: **25201547.4**

(22) Date of filing: **11.09.2025**

(51) International Patent Classification (IPC):
*G06F 3/06* *(2006.01)*

(52) Cooperative Patent Classification (CPC):
**G06F 13/1678; G06F 3/061; G06F 3/0625;
G06F 3/0634; G06F 3/0653; G06F 3/0679;
G06F 13/4295**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.10.2024 US 202418923535**

(71) Applicant: **INTEL Corporation
Santa Clara, CA 95054 (US)**

(72) Inventors:
- **RAO, Raghavendra
  560072 Bangalore, KA (IN)**
- **GUNNAM, Venkata Mahesh
  533234 Mandapeta, AP (IN)**
- **KLEIN, Eliad Adi
  Sunnyvale, CA 94087 (US)**
- **HINES, David
  Cameron Park, CA 95682 (US)**

(74) Representative: **Rummler, Felix et al
Maucher Jenkins
Seventh Floor Offices
Artillery House
11-19 Artillery Row
London SW1P 1RT (GB)**

(54) **TECHNIQUES TO BALANCE POWER AND PERFORMANCE FOR ACCESS TO A STORAGE DEVICE**

(57) Examples include techniques associated with causing a change to a configuration to access a storage device based on determined bandwidth capabilities for read and write transactions to the storage device and based on a determined needed bandwidth to complete monitored read and write transactions to the storage device. The configuration to be based, at least in part, on coupling to the storage device via a storage interface over a serial bus and the configuration to include a link width for the serial bus, a link speed for the serial bus, or a power state to operate the storage device.

FIG. 1

EP 4 733 923 A1

**Description**

## TECHNICAL FIELD

Examples described herein are generally related to techniques associated with balancing power and performance for access to a storage device coupled with a computing system or platform.

## BACKGROUND

A type of storage interface utilized to couple with a computing system or platform is described in one or more specifications published by the Non-Volatile Memory Express (NVM Express) Work Group such as the NVM Express (NVMe) Base Specification, revision 2.0b, published in January of 2022. A type of storage interface arranged to operate according this NVMe specification can be referred to as an NVMe storage interface. An NVMe storage interface is typically designed for solid-drives (SSDs) that can be configured to couple with the computing system or platform via a type of bus described in one or more specifications published by the Peripheral Component Interconnect Special Interest Group (PCI-SIG) such as the PCI Express (PCIe) specifications. These PCIe specifications have gone through multiple revisions, generations, or versions. For example, the most recently published revision or generation of the PCIe specifications is the PCIe Base Specification, Revision 6.0, published in December 2021 and a subsequent revision or generation 7.0 is set to be published in 2025. An NVMe storage interface arranged to use a PCIe bus to couple an SSD to a computing system or platform can have a relatively high data throughput/bandwidth and relatively low latency compared to non-NVMe storage interfaces that were generally utilized prior to NVMe's widespread use (e.g., serial AT attachment (SATA)). In order to manage power consumption, storage devices such as SSDs arranged to utilize an NVMe storage interface can support multiple power states, to enable a user to balance performance and power efficiency.

## BRIEF DESCRIPTION OF THE DRAWINGS

    **FIG. 1** illustrates an example computing platform.
    **FIG. 2** illustrates an example calibration scheme.
    **FIG. 3** illustrates an example portion of a BW capability table.
    **FIG. 4** illustrates an example modes for system performance of storage device.
    **FIG. 5** illustrates an example flow to determine a system performance mode of a storage device.
    **FIG. 6** illustrates an example flow to balance power and performance of the storage device based on a determined mode of the storage device.
    **FIG. 7** illustrates an example apparatus.
    **FIGS. 8** illustrates an example logic flow.
    **FIG. 9** illustrates an example storage medium.

## DETAILED DESCRIPTION

As contemplated by this disclosure, in order to manage power consumption, storage devices such as SSDs arranged to utilize an NVMe storage interface can support multiple power states to enable a user to balance performance and power efficiency. Balancing performance and power efficiency can be based on system demands and indicated power state capabilities of a storage device / SSD. For example, a controller of an SSD arranged to utilize an NVMe storage interface described in the NVMe specification can support up to 32 power states. Although SSDs in client-type (non-data center) deployments will likely have less than 32 power states. A user can identify power states that a controller can support via an NVMe identify command. For example, a power state descriptor table such as described in the NVMe specification and also shown below can be generated based on information obtained via the NVMe identify command. The Maximum Power (MP) field of the power state descriptor table can indicate a sustained maximum power that may be consumed in a given state.

**Power State Descriptor Table**

| Power State | Maximum Power (MP) | Entry Latency | Exit Latency | Relative Read Throughput | Relative Read Latency | Relative Write Throughput | Relative Write Latency |
|---|---|---|---|---|---|---|---|
| 0 | 25W | 5 us | 0 | 0 | 0 | 0 | 0 |

(continued)

| Power State | Maximum Power (MP) | Entry Latency | Exit Latency | Relative Read Throughput | Relative Read Latency | Relative Write Throughput | Relative Write Latency |
|---|---|---|---|---|---|---|---|
| 1 | 18W | 5 us | 0 | 0 | 0 | 1 | 0 |
| 2 | 18W | 5 us | 1 | 0 | 0 | 0 | 0 |
| 3 | 15W | 20 us | 2 | 0 | 0 | 2 | 0 |
| 4 | 10W | 20 us | 1 | 1 | 1 | 3 | 0 |
| 5 | 8W | 20 us | 2 | 2 | 2 | 4 | 0 |
| 6 | 5W | 20 us | 4 | 3 | 3 | 5 | 1 |

In some examples, power optimization features associated with controllers arranged to operate and/or use an NVMe storage interface such as runtime D3 (RTD3) and Autonomous Power State Transition (APST) do exist, but these features are not dynamic workload driven to utilized the various NVMe power states. Existing features/methods such as RTD3 or APST utilize idle time-based algorithms which enable power savings only for idle periods of a storage device. This disclosure describes techniques to dynamically control one or more of an input/output (IO) link speed (e.g., based on PCIe generation), an IO link width (e.g., based on number of PCIe lanes), or an NVMe power state.

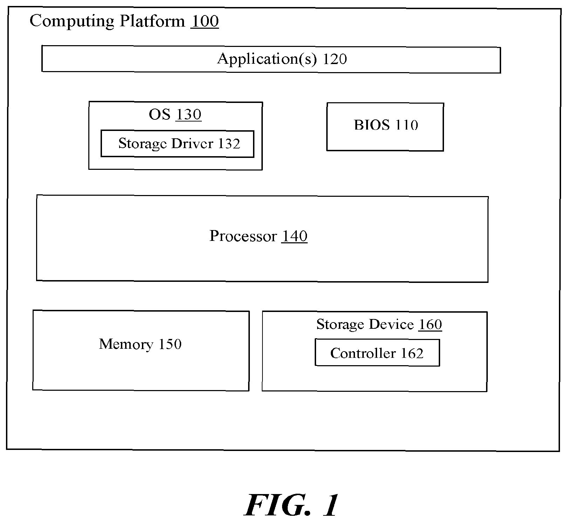

**FIG. 1** illustrates an example computing platform 100. According to some examples, as shown in FIG. 1, computing platform 100 includes a basic input/output system (BIOS) 110, one or more application(s) 120, an operating system (OS) 130, a processor 140, memory 150, or a storage 160. BIOS 110, for example, can be arranged as a Unified Extensible Firmware Interface (UEFI) BIOS. For these examples, computing platform 100 can include, but is not limited to, a server, a server array or server farm, a web server, a network server, an Internet server, a workstation, a mini-computer, a main frame computer, a supercomputer, a network appliance, a web appliance, a distributed computing system, multiprocessor systems, processor-based systems, or combination thereof.

In some examples, OS 130 is shown in FIG. 1 as including a storage driver 132 and storage device 160 is shown as including a controller 162. For these examples, storage driver 132 and controller 162 can each be arranged to operate in cooperation with each other utilizing a storage device interface that is configured to operate in compliance with the NVMe specification utilizing a serial bus configured to operate in compliance with one or more PCIe specification revisions or generations otherwise referred to as PCIe Gen X. For example, "X" can represent any positive, whole integer to indicate a PCIe generation or revision. In some examples, a given PCIe generation or revision can be chosen by logic and/or features of storage driver 132 to cause controller 162 to increase or decrease an IO link speed for data access to storage device 160. Also, logic and/or features of storage driver 132 can cause controller 162 to use various IO link widths to increase or decrease data throughput for access to storage device 160. Also, in some examples, logic and/or features of storage driver 132 can cause controller 162 to use a higher (e.g., P0) or a lower (e.g., P2) energy consumption power state during access to storage device 160. As described more below, the varying of IO link speeds, IO link widths, and/or power states can include implementation of a calibration scheme to determine bandwidth (BW) capabilities for various combinations of IO link speeds, IO link widths, and/or power states and then use those determined BW capabilities with a periodically calculated BW for different types of read or write transactions to implement a dynamic balancing of power and performance for a storage device such as storage device 160.

According to some examples, processor 140 can include one or more processing cores. Processor 140 may include various commercially available processors, including without limitation an AMD® Zen®; ARM® application processor embedded and secure processors; Qualcomm® Snapdragon® processors; Intel® Atom®, Core i3, Core i5, Core i7, Xeon® or Xeon Phi® processors; and similar processors.

Memory 150 can include volatile and/or non-volatile types of memory. In some examples, Memory 150 includes one or more dual in-line memory modules (DIMMs) that are arranged to include any combination of volatile or non-volatile memory. Volatile memory is memory whose state (and therefore the data stored on it) is indeterminate if power is interrupted to the device. Nonvolatile memory refers to memory whose state is determinate even if power is interrupted to the device. Dynamic volatile memory requires refreshing the data stored in the device to maintain state. One example of dynamic volatile memory includes DRAM (dynamic random-access memory), or some variant such as synchronous DRAM (SDRAM). Memory 150, for example, can include volatile memory compatible with a number of memory technologies, such as DDR3 (double data rate version 3), JESD79-3F, originally released by the Joint Electronic Device Engineering Council (JEDEC) in July 2012, DDR4 (DDR version 4), JESD79-4C, originally published in January 2020, DDR5 (DDR version 5), JESD79-5C, originally published in April 2024, LPDDR3 (Low Power DDR version 3), JESD209-3C, originally published in August 2015, LPDDR4 (LPDDR version 4), JESD209-4D, originally published by in June 2021, LPDDR5 (LPDDR version 5), JESD209-5C, originally published in June 2023, WIO2 (Wide Input/output version 2), JESD229-2, originally published in August 2014, HBM (High Bandwidth Memory), JESD235B, originally published in December 2018, HBM2 (HBM version 2), JESD235D, originally published in January 2020, or HBM3 (HBM version 3), JESD238A, originally published in January 2023, or other memory technologies or combinations of memory technologies, as well as technologies based on derivatives or extensions of such above-mentioned specifications. The JEDEC standards or specifications are available at www.jedec.org.

According to some examples, as mentioned above, memory 150 can include various types of non-volatile memory. Non-volatile types of memory may include byte or block addressable types of non-volatile memory having a 3-dimensional (3-D) cross-point memory structure that includes chalcogenide phase change material (e.g., chalcogenide glass) hereinafter referred to as "3-D cross-point memory". Non-volatile types of memory may also include other types of byte or block addressable non-volatile memory such as, but not limited to, multi-threshold level NAND flash memory, NOR flash memory, single or multi-level phase change memory (PCM), resistive memory, nanowire memory, ferroelectric transistor random access memory (FeTRAM), magnetoresistive random access memory (MRAM) that incorporates memristor technology, spin transfer torque MRAM (STT-MRAM), or a combination of any of the above.

In some examples, storage device 160 can include various types of storage devices. For example, SSDs that can be arranged to include primarily non-volatile types of memory but can also include at least some volatile types of memory. As mentioned above, controller 162 of storage device 160 can be arranged to couple with computing platform 100 through an NVMe storage interface or over PCIe serial bus. Examples are not limited to NVMe/PCIe. In other examples, controller 162 can be arranged to couple with computing platform 100 through another type of storage interface such as an Universal Flash Storage (UFS) storage interface described in specifications published by JEDEC such as, but not limited to, the UFS, Version 4.0., JESD220F specification, published in August 2022 and/or prior versions to include versions 1.0 to 3.0. The UFS storage interface can use a serial bus operated in compliance with one or more specifications from the Mobile industry Processor Interface (MIPI) Alliance working groups. Although UFS/MIPI would not include use of power states as mentioned above for NVMe, IO link speeds and IO link widths can be varied to provide a balance between power and performance as mentioned above and described in more detail below. Similar to different generations or versions indicating different link speeds, different versions of the UFS specification can indicate correspondingly different link speeds.

Although not shown in FIG. 1, computing platform 100 may include additional components that facilitate the operation of the computing platform 100. For example, various network and/or internal communication interfaces and associated interconnects can communicatively couple the elements shown in FIG. 1 to each other or to elements on other computing platforms.

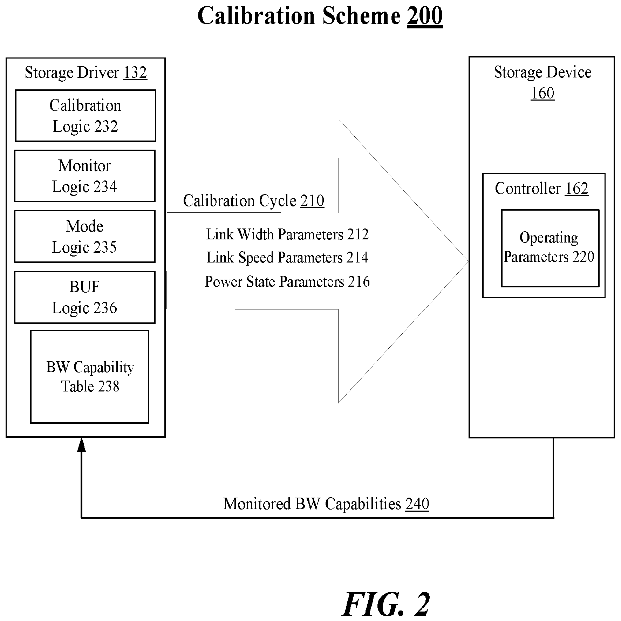

FIG. 2 illustrates an example calibration scheme 200. In some examples, logic and/or features of a storage drive such as storage driver 132 can implement a calibration cycle 210 with a controller of a storage device such as controller 162 of storage device 160. For these examples, as shown in FIG. 2, storage driver 132 can include logic and/or features such as a calibration logic 232 to initiate calibration cycle 210 by providing link width parameters 212, link speed parameters 214, and/or power state parameters 216 to controller 162 in order to set operating parameters 220 for test read or write transactions to storage device 160. Storage driver 132 can also include logic and/or features such as monitor logic 234 to create a BW capability table 238 based on monitored BW capabilities 240 of storage device 160. Storage driver 132, as shown in FIG. 2, can also include a mode logic 235 and a BW utilization factor (BUF) logic 236 that will be described in detail below in relation to determining how to set system performance modes and/or operating parameters for storage device 160.

According to some examples, storage driver 132 and controller 162 can be arranged to operate in cooperation with each other utilizing an NVMe storage device interface utilizing a PCIe bus. For these examples, link width parameters 212 can indicate a number of lanes to be used for data throughput to or from storage device 160 via the PCIe bus. A number of lanes can include, but are not limited to, 1 lane (x1), 2 lanes (x2), 4 lanes (x4), 8 lanes (x8), or 16 lanes (x16). Also, link speed parameters 214 can indicate what PCIe generation or revision the PCIe bus is to be operated. For example, if link speed parameters 214 indicates PCIe Gen 4, then link speed would be a 16.0 gigabits/second (Gbit/s) serial data, if PCI Gen 5, then link speed would be 32 Gbit/s serial data, and if PCI Gen 6, then link speed would be 64 Gbit/s serial data. Also, power state parameters 216 can indicate which NVMe power state storage device 160 is to maintain. For example, which power state as shown in the power state descriptor table that was mentioned above (e.g., P0, P1, P2, etc.).

According to some examples, storage driver 132 and controller 162 can be arranged to operate in cooperation with each other utilizing an UFS storage device interface utilizing a MIPI bus. For these examples, link width parameters 212 can indicate a number of lanes to be used for data throughput to or from storage device 160 via the MIPI bus that can include, but are not limited to, 1 lane (x1) or 2 lanes (x2). Also, link speed parameters 214 can indicate what version of the UFS specification that the MIPI bus is to be operated. For example, if link speed parameters 214 indicates UFS version 1.0, then link speed would be 300 megabytes per second (MB/s), if UFS version 2.0, link speed would be 600 MB/s, if UFS version 3.0, link speed would be 1450 MB/s, or if UFS version 4.0, link speed would be 2900 MB/s. Since versions of the UFS specification do not indicate power states, power state parameters 216 would not be varied during calibration cycle 210 when utilizing a UFS storage device interface.

In some examples, as part of calibration cycle 210, calibration logic 232 can vary each of link width parameters 212, link speed parameters 214, and/or power state parameters 216 to change operating parameters 220 for test read or write transactions to storage device 160. The test read or write transactions can include sequential read or write transaction types that can be based on, for example, data sizes of 128KB for each sequential read or write transaction. The test read or write operations can also include random read or write transaction types that can be based on, for example, data sizes of less than 128KB for each random read or write transaction. Examples are not limited to data sizes of greater or than or less than 128KB other data sizes can be used to determine whether a transaction type is random or sequential (e.g. 32KB, 64KB, 256KB, 512KB, etc.). Monitored BW capabilities 240 for each read/write transaction type can then be used by monitor logic 234 to create BW capability table 238. Entries in BW capability table 238 for a sequential read transaction type, a sequential write transaction type, a random read transaction type, or a random write transition type can indicate BW capabilities for various link width, link speed and/or power state parameters for these read/write transaction types that were monitored by monitor logic 234 during calibration cycle 210.

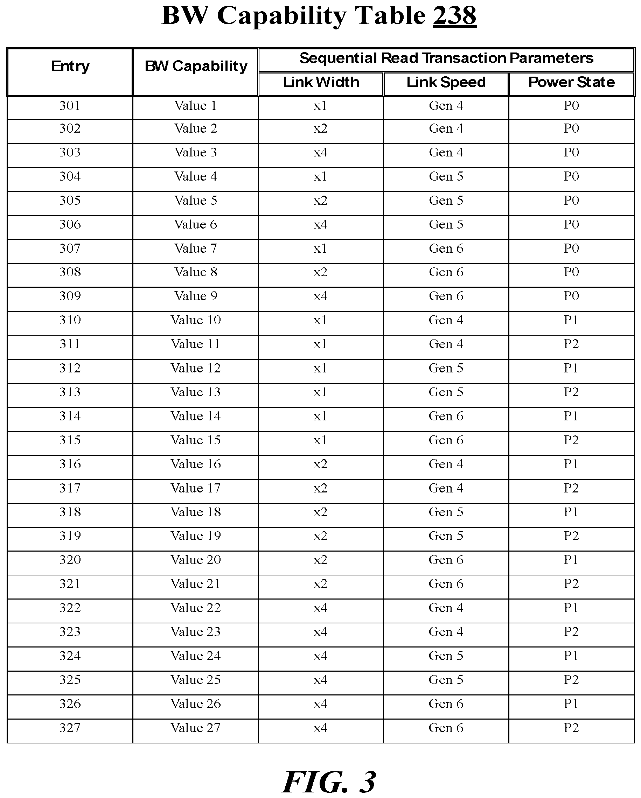

FIG. 3 illustrates an example portion of BW capability table 238. According to some examples, the portion of BW capability table 238 can include entries created (e.g., by monitor logic 234) based on monitored sequential read transactions that were monitored following calibration scheme 200 for various link widths, link speeds and power state parameters (e.g., provided by calibration logic 232). These examples can be based on use of an NVMe storage interface over a PCIe bus to couple storage device 160 to computing platform 100. The PCIe bus can be configured to operate according to multiple PCIe generations or version and having variable link widths and the storage device is capable of operating in multiple NVMe power states.

According to some examples, as shown in FIG. 3, the portion of BW capability table 238 includes entries 301 to 327 that can indicate monitored BW capability values 1-27 for various link width, link speed and power state sequential read transaction parameters. For simplicity purposes, only 3 different parameters for each of link width (x1, x2, x4), link speed (Gen 4, Gen 5, Gen 6) and power state (P0, P1, P2) are shown. More or less parameters can be varied and monitored as part of a calibration cycle to generate entries for BW capability table 238. Also, although not shown in FIG. 3, BW capability table 238 can include a similar number of entries and parameter combinations for sequential write transaction parameters, random read transaction parameters and sequential read transaction parameters that can be monitored over a calibration cycle such as calibration cycle 210 for calibration scheme 200.

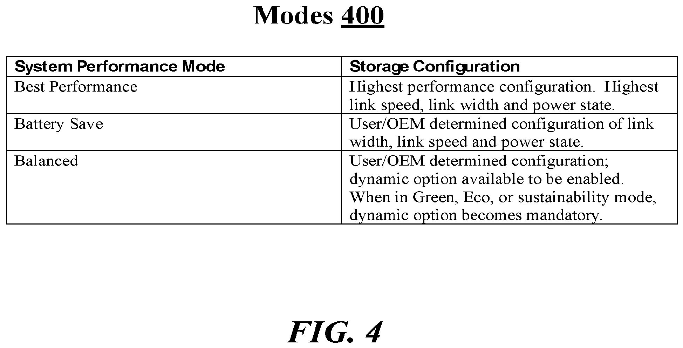

FIG. 4 illustrates an example modes 400 for system performance of a storage device. In some examples, modes 400 can include 3 system performance modes that as shown in FIG. 4 as best performance, battery save or balanced. A best performance system performance mode can place a storage device in a highest performance configuration that can include setting operating parameters for a storage device to use a highest available link speed, link width, and/or power state. For example, if the storage device couples with a computing platform utilizing an NVMe/PCIe configuration, then the highest link speed could be the highest number revision or generation of the PCIe specification via which a PCIe bus coupled with the storage device is capable of operating under. Also, link widths would be based on the PCIe bus's capabilities and NVMe power states would be based on the storage device's and/or computing platform's capabilities to support multiple power states A similarly determined highest link speed could apply for an UFS/MIPI configuration that can be based on the highest number revision of the UFS specification and the link widths can be based on a MIPI bus's capabilities to couple with or access a storage device.

According to some examples, a battery save system performance mode can be user or original equipment manufacturer (OEM) determined configuration for a storage device. If user determined, for example, an OS can include an application that allows a user to selectively choose link width, link speed or power state of the storage device to save or conserve battery power. If OEM determined, for example, the OEM can set a default link width, link speed or power state when a storage device is running on battery power to save or conserve battery power.

In some examples, a balanced system performance mode can also be user or OEM determined. Selection of balanced system performance mode can enable a dynamic option. According to some examples, if a storage device is configured to operate in a Green, Eco, or sustainability mode a dynamic balanced mode can become mandatory. If the balanced system performance mode is user-determined, for example, the option to use the storage device in dynamic balanced mode can be available to the user. If the balanced system performance mode is OEM-determined, for example, the storage device can be set to operate in a Green, Eco, or sustainable mode by default and this default setting can cause the dynamic balanced mode option to become mandatory.

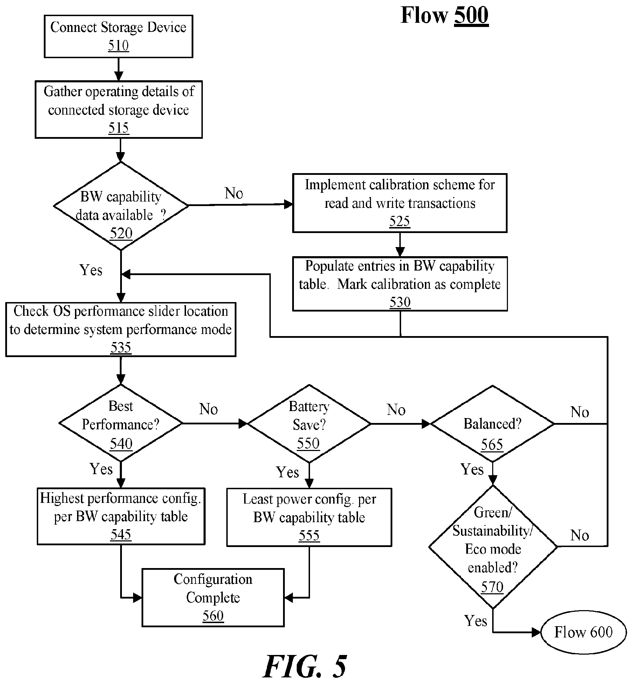

FIG. 5 illustrates an example flow 500 to determine a system performance mode of a storage device. According to some examples, flow 500 shows example actions taken to determine which of the system performance modes mentioned above for example modes 400 based on BW capabilities of the storage device monitored by logic and/or features of an OS storage driver according to example calibration scheme 200. For these examples, actions shown for flow 500 can be implemented by logic and/or features of storage driver 132 such as, but not limited to calibration logic 232, monitor logic 234, or mode logic 235 as described above for example calibration scheme 200 and for creating example BW capability table 238 based on monitored BW capabilities of storage device 160 that can be gathered in cooperation with controller 162 of storage device 160.

In some examples, at block 510, storage device 160 can be connected to computing platform 100.

According to some examples, at block 515, logic and/or features of storage driver 132 can gather operating details of storage device 160. For example, monitor logic 234 can gather operating details from controller 162 that can indicate link speed, link width and/or power state capabilities of storage device 160.

In some example, at decision block 520, logic and/or features of storage driver 132 can determine whether BW capability data is available for storage device 160. For example, monitor logic 234 can determine whether a BW capability table such as BW capability table 238 has been created or generated for each of the sequential/random, read/write transaction types. If BW capability data is available, flow 500 moves to block 535, otherwise flow 500 moves to block 525.

According to some examples, moving from decision block 520 to block 525, logic and/or features of storage driver 132 can implement a calibration scheme for the various types of read and write transactions that access storage device 160. For example, calibration logic 232 can initiate a calibration cycle that varies operating parameters of storage device for the various types of read and write transaction based, at least in part, on link speed, link width, and/or power states as mentioned above for example calibration scheme 200.

In some examples, logic and/or features of storage driver 132 can populate entries in a BW capability table and mark calibration of storage device 160 as complete. For example, monitor logic 234 can populate the entries as mentioned above for BW capability table 238 and calibration logic 232 can mark the calibration as completed.

According to some examples, moving from either block 530 or from decision block 520 to block 532, logic and/or features of storage driver 132 can check an OS performance slider location to determine a system performance mode for storage device 160. For these examples,, OS 130 can include an application that indicates an OS performance slider location for storage device 160 that can be user or OEM determined and points to one of the three example modes shown in FIG. 4. Mode logic 235 can determine the system performance mode based on the indicated OS performance slider location that points to one of the three example system performance modes.

In some examples, at decision block 540, if mode logic 235 determines that storage device 160 is to be configured for a best performance system performance mode, flow 500 moves to block 545, otherwise flow 500 moves to decision block 550.

According to some examples, at block 545, logic and/or features of storage driver 132 such as mode logic 235 can cause storage device 160 to be placed in a highest performance configuration per BW capability table 238.

In some examples, moving from decision block 540 to decision block 550, if mode logic 235 determines that storage device 160 is to be configured for a battery save system performance mode, flow 500 moves to block 555, otherwise flow 500 moves to decision block 565.

According to some examples, at block 555 logic and/or features of storage driver 132 such as mode logic 235 can cause storage device 160 to be placed in a least power configuration per BW capability table 238.

In some examples, moving from either block 545 or block 555, at block 560, configuration of the storage device 160 in regard to setting power or performance configurations based on best performance or battery save system performance mode is complete.

According to some examples, moving from decision block 550 to decision block 565, if mode logic 235 determines that storage device 160 is to be configured for a balanced system performance mode, flow 500 moves to decision block 570, otherwise flow 500 moves to block 535 and the OS performance slider location is checked again.

In some examples, moving from decision block 565 to decision block 570, if mode logic 235 determines that storage device 160 has a Green, sustainability or Eco mode enabled, flow 500 then moves to flow 600, otherwise flow 500 moves to block 535 and the OS performance slider location is checked again.

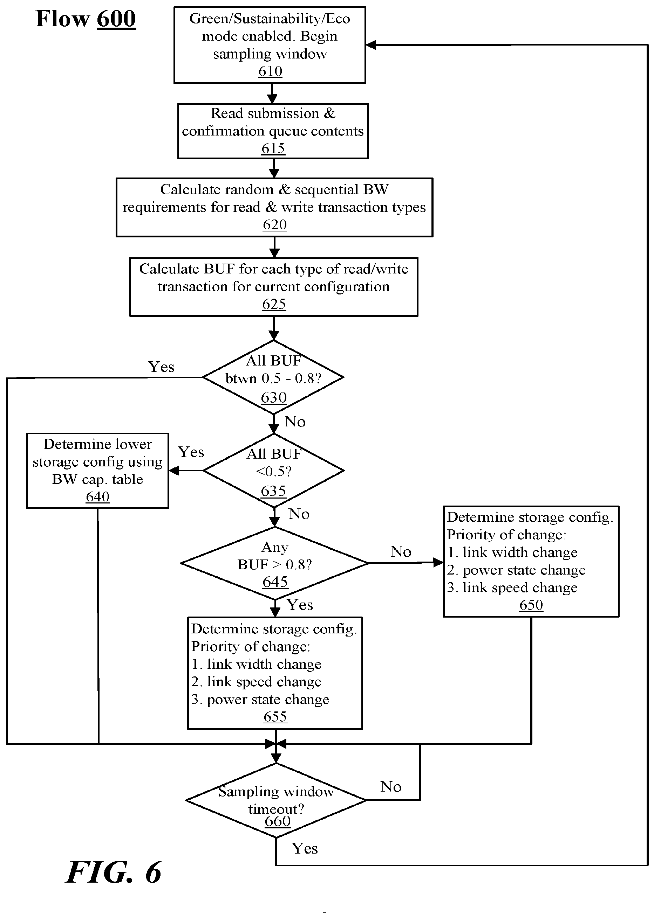

**FIG. 6** illustrates an example flow 600. Flow 600 is a continuation of flow 500 based on an example determination that storage device 160 was configured in a balanced system performance mode and a Green, sustainability, Eco mode was determined as enabled. According to some examples, flow 600 illustrates techniques to dynamically balance power and performance of a storage device such as storage device 160 based on the determined balanced system performance mode that also has enabled a Green, sustainability, Eco mode. For these examples, actions shown for flow 600 can be implemented by logic and/or features of storage driver 132 such as, but not limited to monitor logic 234, mode logic 235 or BUF logic 236 utilizing example BW capability table 238 and periodically calculate BW requirements for read and write transaction to storage device 160 to determine whether to change a configuration of storage device 160 to balance power and performance.

According to some examples, at block 610, logic and/or features of storage driver 132 such as mode logic 235 has determined that a Green, sustainability or Eco mode has been enabled for storage device 160 and causes a sampling window to begin. For these examples, the sampling window can be set for a period of time of 500 milliseconds (ms). Examples are not limited to 500ms, other periods of time can be set for a sampling window to strike a balance between power usage and performance.

In some example, logic and/or features of storage driver 132 such as monitor logic 234 can be configured to read submission and confirmation queue contents for read and write transaction types to storage device 160. For these examples, the read/monitored submission and confirmation queues can be maintained in memory 150 of computing platform 100 and accessible to monitor logic 234 of storage driver 132. Monitor logic 234 can classify each read/monitored read and write transaction type as either a sequential read/write transaction type (e.g., data size > 128KB) or a random read/write transaction type (e.g., data size ≤ 128KB). Also, depending on usage scenario under which computing 100 is operating, data sizes used to determine whether a read or write transaction type are random or sequential can vary. For example, in datacenter or a network edge scenario, smaller data sizes than 128KB could be considered random. Meanwhile, in desktop or laptop usage scenarios, a data size below 128KB or even data sizes larger than a 128KB data size can be acceptable for determining a read or write transaction type.

According to some examples, at block 620, logic and/or features of storage driver 132 such as BUF logic 236 can calculate random and sequential BW requirements for read and write transaction types. For example, based on the read submission and confirmation queue contents, BUF logic 236 can calculate what BW requirements would be needed for storage device 160 to fulfill or service read and/or write transaction types read from the submission and confirmation queue contents based on a summation of data size Σ for each read and/or write transaction type. For example, Σ data size for random read (RR) transaction types, Σ data size for random write (RR) transaction types, Σ data size for sequential read (SR) transaction types, or Σ data size for sequential write (SW) transaction types. Calculated BW requirement(s) can include at least one of an RR calculated BW, an RW calculated BW, an SR calculated BW, or an SW calculated BW.

In some examples, at block 625, logic and/or features of storage driver 132 such as BUF logic 236 can calculate separate BUFs for each type of read/write transaction. For these examples, calculated BUFs for each type of read/write transaction can be based on example equation (1).

$$(1)\ \mathrm{BUF} = \frac{\mathrm{Calculated\ BW}}{\mathrm{Max\ BW\ in\ current\ config.\ per\ BW\ config.\ table}}$$

According to some examples, to calculate a BUF for an SR transaction according to example equation (1), BUF logic 236 can use an SR calculated BW as an input for "Calculated BW" and a BW capability value from among entries 301 to 327 from BW capability table 238 that match storage device 160's current operating configuration as an input for "Max BW in current config. per BW config. table". BUFs for the SW, RR and/or RW transactions can similarly be calculated using respective calculated BWs for these transactions types and BW capability values for respective entries of BW capability table 238 that match storage device 160's current operating configuration. As a result, up to 4 separate BUFs can be calculated for SR, SW, RR and/or RW transaction types..

In some examples, at decision block 630, logic and/or features of storage driver 132 such as BUF logic 236 can determine whether all calculated BUFs are between a value of 0.5 to 0.8. If all calculated BUFs are between a value of 0.5 to 0.8, then flow 600 moves to decision block 660, otherwise flow 600 moves to decision block 635. For these examples, BUF logic 236 determines if all of the calculated BUFs indicate that at least 50% and up to 80% of their respective BWs for respective transaction type are currently being utilized and this level of utilization can represent an acceptable balance of power and performance for each transaction type. Hence, no configuration change is needed for storage device 160. Examples are not limited to a range of 0.5 to 0.8 as an acceptable balance. In some scenarios, where a higher performance is more important (e.g., an enterprise server), an example range of 0.7 to 0.95 can be set. In other scenarios, where power saving is more important (e.g., a notebook), an example range of 0.4 to 0.7 can be set.

According to some examples, moving from decision block 630 to decision block 635, logic and/or features of storage driver 132 such as BUF logic 236 can determine whether all calculated BUFs are below a value of 0.5. If all calculated BUFs are below a value of 0.5, then flow 600 moves to block 640, otherwise flow 600 moves to decision block 645. Similar to as mentioned above for decision block 630, examples are not limited to a value of 0.5, depending on the operating scenario from computing platform 100, the value can be higher (e.g., higher need for performance) or lower (higher need for power saving).

In some examples, moving from decision block 635 to block 640, logic and/or features of storage driver 132 such as mode logic 235 can determine a lower storage configuration for storage device 160 using BW capability table 238. For these examples, the lower storage configuration can be such that a newly calculated BUF by BUF logic 236 would be equal to or above a value of 0.5 for each transaction type when using different BW capability values from BW capability table 238 that correspond to the lower storage configuration that can have a lower power consumption rate, lower link speed, and/or lower link width.

According to some examples, moving from decision block 635 to decision block 645, logic and/or features of storage driver 132 such BUF logic 236 can determine whether any calculated BUF for read or write transactions has exceeded a value of 0.8. If a read or write transaction has a calculated BUF that exceeds 0.8, flow 600 moves to block 655, otherwise flow 600 moves to block 650. Similar to as mentioned above for decision blocks 630 and 635, examples are not limited to a value of 0.8, depending on the operating scenario from computing platform 100, the value can be higher (e.g., higher need for performance) or lower (higher need for power saving).

In some examples, moving from decision block 645 to block 650, logic and/or features of storage driver 132 such as mode logic 235 can determine a storage configuration for storage device 160 based on a priority of change that first changes a link width to see if that change can bring a newly calculated BUF for a given transaction type found above a BUF value of 0.5 to a newly calculated BUF value at or below 0.5, then change a power state if link width doesn't bring a new calculated BUF value below 0.8 and then change a link speed if link width and power state changes do not bring the BUF value below at or below 0.5. For these examples, a BUF value at or below 0.5 would indicate that current operating parameters for storage device 160 may be inadequate to meet an acceptable power saving or performance per watt metrics and changes to decrease a link width, decrease a power state or decrease a link speed may be needed to meet an acceptable performance per watt metrics. Each of these changes attempts to balance power consumption with performance to dynamically adjust operating parameters for storage device 160 based current or real time workloads.

In some examples, moving from decision block 645 to block 655, logic and/or features of storage driver 132 such as mode logic 235 can determine a storage configuration for storage device 160 based on a priority of change that first changes a link width to see if that change can bring a newly calculated BUF for a given transaction type found above a BUF value of 0.8 to a newly calculated BUF value below 0.8, then change a link speed if link width doesn't bring a new calculated BUF value below 0.8 and then change a power state if link width and link speed changes do not bring the BUF value below 0.8. For these examples, a BUF value above 0.8 would indicate that current operating parameters for storage device 160 may be inadequate to meet an acceptable performance level and changes to increase a link width, increase a link speed state or increase a power state may be needed to meet an acceptable performance level. As mentioned above for block 650, each of these changes attempts to balance power consumption with performance to dynamically adjust operating parameters for storage device 160 based on current or real time workloads.

In some examples, moving from block 640, block 650 or block 655 to decision block 660, logic and/or features of storage driver 132 such as BUF logic 236 can determine whether the sampling window that was begun at block 610 has timed out. For example, if 500ms has not elapsed, flow 600 stays at decision block 660, otherwise flow 600 moves to 610 and a new sampling window is started/begins.

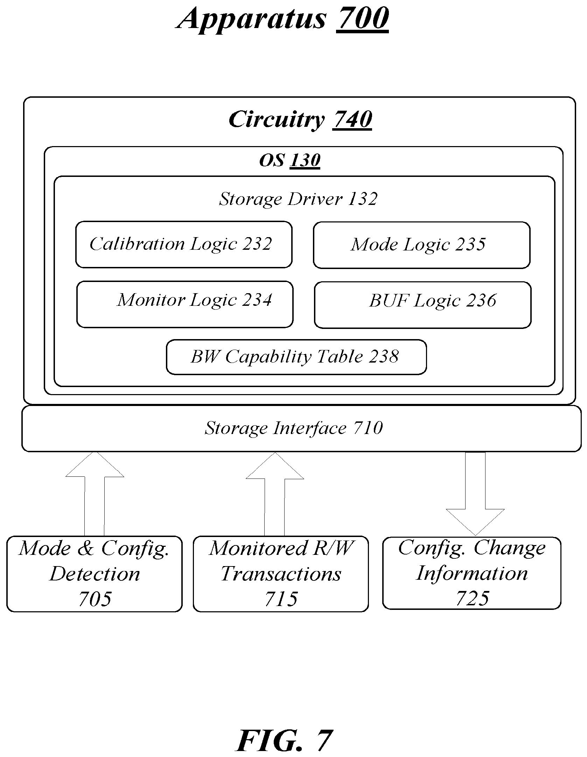

**FIG. 7** illustrates an example apparatus 700. Although apparatus 700 shown in FIG. 7 has a limited number of elements in a certain topology, it may be appreciated that the apparatus 700 may include more or less elements in alternate topologies as desired for a given implementation.

According to some examples, apparatus 700 may be supported by circuitry 740 and apparatus 700 may be located as part of circuitry included in a processor of a computing platform, such as processor 140 of computing platform 100. For example, circuitry 740 can be arranged to execute operating system 130 that includes storage driver 132 having logic and/or features such as calibration logic 232, monitor logic 234, mode logic 235, or BUF logic 236. In some examples, logic and/or features of storage driver 132 can communicatively couple with storage device 160 via storage interface 710. Storage interface 710 can be configured to communicatively couple with the storage device over a serial bus of computing platform 100. In one example, storage interface 710 can be arranged to operate according to the NVMe specification (e.g., rev. 2.0b) and the serial bus can be arranged to operate according to one or more PCIe base specifications from revision 1.0 to revision 6.0. In another example, storage interface 710 can be arranged to operate according to a plurality of specifications by JEDEC to include UFS, versions 1.0 to 4.0 and the serial bus can be arranged as a MIPI serial bus.

In some examples, mode logic 235 of storage driver 132 can detect that storage device 160 has communicatively coupled with computing platform 100 via storage interface 710 and that storage device 160 is in a mode of operation to enable a dynamic change of a configuration to access storage device 160. The configuration can include a link width for the serial bus, a link speed for the serial bus, or a power state to operate storage device 160. For these examples, mode and configuration detection 705 can include information via which mode logic 235 can detect the coupling of storage device 160, the mode of operation, and the configuration.

According to some examples, monitor logic 234 of storage driver 132 can monitor access transactions to storage device 160 to determine a needed BW to complete read transactions or a needed BW to complete write transactions. For these example, monitored read and write transactions 715 can include information to determine the needed BW (e.g., based on completion and submission queue information).

In some examples, BUF logic 236 of storage driver 132 can determine a first BW capability to access storage device 160 for a read transaction based on the configuration and can determine a first BUF value based on dividing the needed BW to complete the read transactions by the first BW capability (e.g., see example equation (1)). BUF logic 236 can also determine a second BW capability to access storage device 160 for a write transaction based on the configuration and can determine a second BUF value based on dividing the needed BW to complete the write transactions by the first BW capability. For these examples, the first BW capability and the second BW capability can be obtained from BW capability table 238 that can include entries to indicate the first and the second BW capabilities.

According to some examples, mode logic 235 of storage drive 132 can then determine whether to cause a change to the configuration to access storage device 160 based on the first BUF value or the second BUF value. For example, see flow 600 for examples of how the configuration to access storage device 160 can be changed based on BUF values. For these examples, configuration change information 725 can include information to cause the configuration change (e.g.,

indicate what operating parameters may or may not need to be adjusted to higher or lower levels).

Included herein is a set of logic flows representative of example methodologies for performing novel aspects of the disclosed architecture. While, for purposes of simplicity of explanation, the one or more methodologies shown herein are shown and described as a series of acts, those skilled in the art will understand and appreciate that the methodologies are not limited by the order of acts. Some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

A logic flow may be implemented in software, firmware, and/or hardware. In software and firmware examples, a logic flow can be implemented by computer executable instructions stored on at least one non-transitory computer readable medium or machine readable medium, such as an optical, magnetic or semiconductor storage. The examples are not limited in this context.

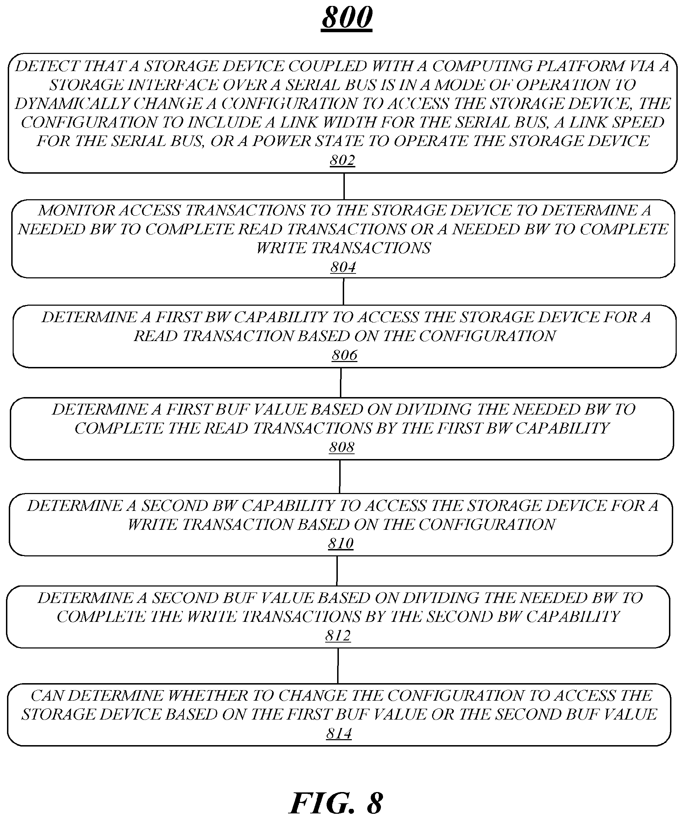

**FIG. 8** illustrates an example logic flow 800. Logic flow 800 can be representative of some or all of the operations executed by one or more logic, features, or devices described herein, such as logic and/or features of storage driver 132 supported by circuitry 740 included in apparatus 700. More particularly, logic flow 800 can be implemented by one or more of calibration logic 232, monitor logic 234, mode logic 235, or BUF logic 236.

In some examples, as shown in FIG. 8, logic flow 800 at block 802 can detect that a storage device coupled with a computing platform via a storage interface over a serial bus is in a mode of operation to dynamically change a configuration to access the storage device, the configuration to include a link width for the serial bus, a link speed for the serial bus, or a power state to operate the storage device. For these examples, mode logic 235 can detect the mode of operation of the storage device.

According to some examples, as shown in FIG. 8, logic flow 800 at block 804 can monitor access transactions to the storage device to determine a needed BW to complete read transactions or a needed BW to complete write transactions. For these example, monitor logic 234 can monitor the read and write transactions to determine the needed BW.

In some examples, as shown in FIG. 8, logic flow 800 at block 806 can determine a first BW capability to access the storage device for a read transaction based on the configuration. For these examples, BUF logic 236 can determine the first BW capability.

According to some examples, as shown in FIG. 8, logic flow 800 at block 808 can determine a first BUF value based on dividing the needed BW to complete the read transactions by the first BW capability. For these examples, BUF logic 236 can determine the first BUF value.

In some examples, as shown in FIG. 8, logic flow 800 at block 810 can determine a second BW capability to access the storage device for a write transaction based on the configuration. For these examples, BUF logic 236 can determine the second BW capability.

According to some examples, as shown in FIG. 8, logic flow 800 at block 812 can determine a second BUF value based on dividing the needed BW to complete the write transactions by the second BW capability. For these examples, BUF logic 236 can determine the second BUF value.

In some examples, as shown in FIG. 8, logic flow 800 at block 814 can determine whether to change the configuration to access the storage device based on the first BUF value or the second BUF value. For these examples, mode logic 235 can determine whether to change the configuration to access the storage device.

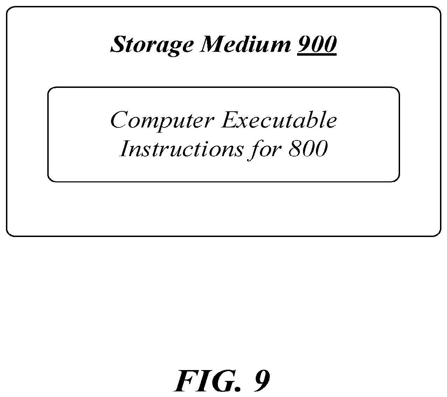

**FIG. 9** illustrates an example of a storage medium. As shown in FIG. 9, the storage medium includes a storage medium 900. The storage medium 900 may comprise an article of manufacture. In some examples, storage medium 900 can include any non-transitory computer readable medium or machine readable medium, such as an optical, magnetic or semiconductor storage. Storage medium 900 can store various types of computer executable instructions, such as instructions to implement logic flow 800. Examples of a computer readable or machine readable storage medium can include any tangible media capable of storing electronic data, including volatile memory or non-volatile memory, removable or non-removable memory, erasable or non-erasable memory, writeable or re-writeable memory, and so forth. Examples of computer executable instructions can include any suitable type of code, such as source code, compiled code, interpreted code, executable code, static code, dynamic code, object-oriented code, visual code, and the like. The examples are not limited in this context.

One or more aspects of at least one example can be implemented by representative instructions stored on a machine-readable medium which represents various logic within the processor, which when read by a machine causes the machine to fabricate logic to perform the techniques described herein. Such representations, known as "IP cores" can be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, various examples also include non-transitory, tangible machine-readable media containing instructions or containing design data, such as Hardware Description Language (HDL), which defines structures, circuits, apparatuses, processors and/or system features described herein. Such examples may also be referred to as program products.

In some cases, an instruction converter can be used to convert an instruction from a source instruction set to a target instruction set. For example, the instruction converter can translate (e.g., using static binary translation, dynamic binary translation including dynamic compilation), morph, emulate, or otherwise convert an instruction to one or more other instructions to be processed by the core. The instruction converter can be implemented in software, hardware, firmware, or a combination thereof. The instruction converter may be on processor, off processor, or part on and part off processor.

Various examples can be implemented using hardware elements, software elements, or a combination of both. In some examples, hardware elements can include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements can include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements can vary in accordance with any number of factors, such as desired computational rate, power levels, heat tolerances, processing cycle budget, input data rates, output data rates, memory resources, data bus speeds and other design or performance constraints, as desired for a given implementation.

Some examples may be described using the expression "in one example" or "an example" along with their derivatives. These terms mean that a particular feature, structure, or characteristic described in connection with the example is included in at least one example. The appearances of the phrase "in one example" in various places in the specification are not necessarily all referring to the same example.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The following examples pertain to additional examples of technologies disclosed herein.

Example 1. An example computing platform can include a serial bus, a storage interface configured to communicatively couple to a storage device over the serial bus, and circuitry to execute an operating system that includes a storage driver. The storage driver can be configured to detect that a storage device has communicatively coupled with the computing platform via the storage interface and that the storage device is in a mode of operation to enable a dynamic change of a configuration to access the storage device. The configuration can include a link width for the serial bus, a link speed for the serial bus, or a power state to operate the storage device. The storage drive can also be configured to monitor access transactions to the storage device to determine a needed BW to complete read transactions. The storage drive can also be configured to determine a first BW capability to access the storage device for a read transaction based on the configuration. The storage drive can also be configured to determine a first BUF value based on dividing the needed BW to complete the read transactions by the first BW capability. The storage drive can also be configured to determine whether to cause a change to the configuration to access the storage device based on the first BUF value.

Example 2. The computing platform of example 1, the storage driver can also be configured to monitor the access transaction to the storage device to determine a needed BW to complete write transactions. The storage drive can also be configured to determine a second BW capability to access the storage device for a write transaction based on the configuration. The storage drive can also be configured to determine a second BUF value based on dividing the needed BW to complete the write transactions by the second BW capability. The storage drive can also be configured to determine whether to cause a change to the configuration to access the storage device based on the first BUF value or the second BUF value.

Example 3. The computing platform of example 2, the storage driver can also be configured to determine not to cause a change to the configuration of the storage device based on the first BUF value and the second BUF value being between 0.5 and 0.8.

Example 4. The computing platform of example 2, the storage drive can also be configured to determine that the first BUF value and the second BUF value are below 0.5. The storage drive can also be configured to cause a change to the configuration of the storage device to a second configuration such that one or more of the link width, the link speed or the power state are set to lower levels that cause determined lowered BW capabilities for the read transaction and the write transaction such that newly determined BUF values for the read transactions and the write transactions will have new values between 0.5 and 0.8.

Example 5. The computing platform of example 2, the storage drive can also be configured to determine that the first BUF value is less than 0.5 and the second BUF value is greater than 0.5 but less than 0.8. The storage drive can also be configured to cause a change to the configuration of the storage device to a second configuration such that one or more of the link width, the link speed or the power state are set to lower levels that cause determined lowered BW capabilities for the read transaction and the write transaction such that newly determined BUF values for the read transactions and the write transactions will have new values between 0.5 and 0.8.

Example 6. The computing platform of example 2, the storage drive can also be configured to determine that the first BUF has a value greater than 0.8 and the second BUF value is greater than 0.5 but less than 0.8. The storage drive can also be configured to cause a change to the configuration of the storage device to a second configuration such that one or more of the link width, the link speed or the power state are set to higher levels that cause determined higher data BW capabilities for the read transaction and the write transaction such that newly determined BUF values for the read transactions and the write transactions will have new values between 0.5 and 0.8.

Example 7. The computing platform of example 2, the storage interface can be configured to operate according to a first specification by the NVMe work group to include the NVMe base specification, revision 2.0b and the serial bus is arranged to operate according to one or more specifications by the PCI-SIG to include PCIe Base specifications from revision 1.0 to revision 6.0.

Example 8. The computing platform of example 7, the configuration to include the link width, the link speed, or the power state can include the link width to be based on one or more PCIe lanes, the link speed to be based on a revision of a PCIe Base specification from among revisions 1.0 to 6.0, and the power state to be based on NVMe power states. For this example, a higher number of PCIe lanes, higher numbered revision, and/or lower power states can cause determined higher BW capabilities for the read transaction and the write transaction.

Example 9. The computing platform of example 2, the storage interface can be configured to operate according to a plurality of specifications by the JEDEC work group to include UFS, versions 1.0 to 4.0.

Example 10. The computing platform of example 9, the configuration to include the link width, the link speed, or the power state can include the link width to be based on one or more UFS lanes and the link speed to be based on a revision of a UFS specification from among revisions 1.0 to 4.0. For this example, a higher number of UFS lanes and/or high numbered revision can cause determined higher BW capabilities for the read transaction and the write transaction.

Example 11. The computing platform of example 2, to determine the first BW capability to access the storage device for the read transaction based on the configuration can include the storage driver to obtain the first BW capability from a first entry in a table that indicated the first BW capability. The first entry can be generated during a calibration cycle that monitored BW capabilities to access the storage device for read transactions with the storage device in the configuration. For this example, determining the second BW capability to access the storage device for the write transaction based on the configuration can include obtaining the second BW capability from a second entry in the table that indicated the second BW capability. The second entry can be generated during the calibration cycle that also monitored BW capabilities to access the storage device for write transactions.

Example 12. The computing platform of example 2, the monitored read and write transactions to the storage device can include sequential read and sequential write transactions to the storage device based on a data size for each transaction of the monitored read and write transaction being greater than 128 kilobytes.

Example 13. The computing platform of example 2, the monitored read and write transactions to the storage device can include random read and random write transactions to the storage device based on a data size for each transaction of the monitored read and write transaction being less than 128 kilobytes.

Example 14. An example at least one machine readable medium can include a plurality of instructions that in response to being executed by an operating system that includes a storage driver, can cause the storage driver to detect that a storage device has communicatively coupled with a computing platform via a storage interface over a serial bus and that the storage device is in a mode of operation to dynamically change a configuration to access the storage device. The configuration can include a link width for the serial bus, a link speed for the serial bus, or a power state to operate the storage device. The instructions can also cause the storage driver to monitor access transactions to the storage device to determine a needed BW to complete read transactions. The instructions can also cause the storage driver to determine a first BW capability to access the storage device for a read transaction based on the configuration, The instructions can also cause the storage driver to determine a first BUF value based on dividing the needed BW to complete the read transactions by the first BW capability. The instructions can also cause the storage driver to determine whether to change the configuration to access the storage device based on the first BUF value.

Example 15. The at least one machine readable medium of example 14, the instructions can also cause the storage driver to monitor the access transaction to the storage device to determine a needed BW to complete write transactions. The instructions can also cause the storage driver to determine a second BW capability to access the storage device for a write transaction based on the configuration. The instructions can also cause the storage driver to determine a second BUF value based on dividing the needed BW to complete the write transactions by the second BW capability. The instructions can also cause the storage driver to determine whether to change the configuration to access the storage device based on the first BUF value or the second BUF value.

Example 16. The at least one machine readable medium of example 15, the instructions can also cause the storage driver to determine not to cause a change to the configuration of the storage device based on the first BUF value and the second BUF value being between 0.7 and 0.95.

Example 17. The at least one machine readable medium of example 15, the instructions can also cause the storage driver to determine that the first BUF value and the second BUF value are below 0. The instructions can also cause the storage driver to cause a change to the configuration of the storage device to a second configuration such that one or more of the link width, the link speed or the power state are set to lower levels that cause determined lowered BW capabilities for the read transaction and the write transaction such that newly determined BUF values for the read transactions and the write transactions will have new values between 0.7 and 0.95.

Example 18. The at least one machine readable medium of example 15, the instructions can also cause the storage driver to determine that the first BUF value is less than 0.7 and the second BUF value is greater than 0.7 but less than 0.95. The instructions can also cause the storage driver to cause a change to the configuration of the storage device to a second configuration such that one or more of the link width, the link speed or the power state are set to lower levels that cause determined lowered BW capabilities for the read transaction and the write transaction such that newly determined BUF values for the read transactions and the write transactions will have new values between 0.7 and 0.95.

Example 19. The at least one machine readable medium of example 15, the instructions can also cause the storage driver to determine that the first BUF has a value greater than 0.95 and the second BUF value is greater than 0.7 but less than 0.95. The instructions can also cause the storage driver to cause a change to the configuration of the storage device to a second configuration such that one or more of the link width, the link speed or the power state are set to higher levels that cause determined higher data BW capabilities for the read transaction and the write transaction such that newly determined BUF values for the read transactions and the write transactions will have new values between 0.7 and 0.95.

Example 20. The at least one machine readable medium of example 15, the storage interface can be configured to operate according to a first specification by the NVMe work group to include the NVMe base specification, revision 2.0b and the serial bus is arranged to operate according to one or more specifications by the PCI-SIG to include PCIe Base specifications from revision 1.0 to revision 6.0.

Example 21. The at least one machine readable medium of example 20, the configuration to include the link width, the link speed, or the power state can include the link width to be based on one or more PCIe lanes, the link speed to be based on a revision of a PCIe Base specification from among revisions 1.0 to 6.0, and the power state to be based on NVMe power states. For this example, a higher number of PCIe lanes, higher numbered revision, and/or lower power states can cause determined higher BW capabilities for the read transaction and the write transaction.

Example 22. The at least one machine readable medium of example 15, the storage interface can be configured to operate according to a plurality of specifications by the JEDEC work group to include UFS, versions 1.0 to 4.0.

Example 23. The at least one machine readable medium of example 22, the configuration to include the link width, the link speed, or the power state can include the link width to be based on one or more UFS lanes and the link speed to be based on a revision of a UFS specification from among revisions 1.0 to 4.0. For this example, a higher number of UFS lanes and/or high numbered revision can cause determined higher BW capabilities for the read transaction and the write transaction.

Example 24. The at least one machine readable medium of example 15, to determine the first BW capability to access the storage device for the read transaction can be based on the configuration includes the storage driver to obtain the first BW capability from a first entry in a table that indicated the first BW capability. The first entry can be generated during a calibration cycle that monitored BW capabilities to access the storage device for read transactions with the storage device in the configuration. For this example, determining the second BW capability to access the storage device for the write transaction based on the configuration can include obtaining the second BW capability from a second entry in the table that indicated the second BW capability. The second entry can be generated during the calibration cycle that also monitored BW capabilities to access the storage device for write transactions.

Example 25. The at least one machine readable medium of example 15, the monitored read and write transactions to the storage device can include sequential read and sequential write transactions to the storage device based on a data size for each transaction of the monitored read and write transaction being greater than 64 kilobytes.

Example 26. The at least one machine readable medium of example 15, the monitored read and write transactions to the storage device can be random read and random write transactions to the storage device based on a data size for each transaction of the monitored read and write transaction being less than 64 kilobytes.

Example 27. An example method can include detecting that a storage device coupled with a computing platform via a storage interface over a serial bus is in a mode of operation to dynamically change a configuration to access the storage device. The configuration can include a link width for the serial bus, a link speed for the serial bus, or a power state to operate the storage device. The method can also include monitoring access transactions to the storage device to determine a needed BW to complete read transactions. The method can also include determining a first BW capability to access the storage device for a read transaction based on the configuration. The method can also include determining a first BUF value based on dividing the needed BW to complete the read transactions by the first BW capability. The method can also include determining whether to change the configuration to access the storage device based on the first BUF value.

Example 28. The method of example 27 can also include monitoring the access transaction to the storage device to determine a needed BW to complete write transactions. The method can also include determining a second BW capability to access the storage device for a write transaction based on the configuration. The method can also include determining a second BUF value based on dividing the needed BW to complete the write transactions by the second BW capability. The method can also include determining whether to change the configuration to access the storage device based on the first BUF value or the second BUF value.

Example 29. The method of example 28 can also include determining not to change the configuration of the storage device based on the first BUF value and the second BUF value being between 0.4 and 0.7.

Example 30. The method of example 28 can also include determining that the first BUF value and the second BUF value are below 0.4. The method can also include changing the configuration of the storage device to a second configuration such that one or more of the link width, the link speed or the power state are set to lower levels that cause determined lowered BW capabilities for the read transaction and the write transaction such that newly determined BUF values for the read transactions and the write transactions will have new values between 0.4 and 0.7.

Example 31. The method of example 28 can also include determining that the first BUF value is less than 0.4 and the second BUF value is greater than 0.4 but less than 0.7. The method can also include changing the configuration of the storage device to a second configuration such that one or more of the link width, the link speed or the power state are set to lower levels that cause determined lowered BW capabilities for the read transaction and the write transaction such that newly determined BUF values for the read transactions and the write transactions will have new values between 0.4 and 0.7.

Example 32. The method of example 28 can also include determining that the first BUF has a value greater than 0.7 and the second BUF value is greater than 0.4 but less than 0.7. The method can also include changing the configuration of the storage device to a second configuration such that one or more of the link width, the link speed or the power state are set to higher levels that cause determined higher data BW capabilities for the read transaction and the write transaction such that newly determined BUF values for the read transactions and the write transactions will have new values between 0.4 and 0.7.

Example 33. The method of example 28, the storage interface can be arranged to operate according to a first specification by the NVMe work group to include the NVMe base specification, revision 2.0b and the serial bus is arranged to operate according to one or more specifications by the PCI-SIG to include PCIe Base specifications from revision 1.0 to revision 6.0.

Example 34. The method of example 33, the configuration to include the link width, the link speed, or the power state can include the link width being based on one or more PCIe lanes, the link speed being based on a revision of a PCIe Base specification from among revisions 1.0 to 6.0, and the power state based on NVMe power states. For this example, a higher number of PCIe lanes, higher numbered revision, and/or lower power states can cause determined higher BW capabilities for the read transaction and the write transaction.

Example 35. The method of example 28, the storage interface can be arranged to operate according to a plurality of specifications by the JEDEC work group to include UFS, versions 1.0 to 4.0.

Example 36. The method of example 35, the configuration to include the link width, the link speed, or the power state can include the link width being based on one or more UFS lanes and the link speed being based on a revision of a UFS specification from among revisions 1.0 to 4.0. For this example, a higher number of UFS lanes and/or high numbered revision can cause determined higher BW capabilities for the read transaction and the write transaction.

Example 37. The method of example 28, determining the first BW capability to access the storage device for the read transaction based on the configuration can include obtaining the first BW capability from a first entry in a table that indicated the first BW capability. The first entry can be generated during a calibration cycle that monitored BW capabilities to access the storage device for read transactions with the storage device in the configuration. For this example, determining the second BW capability to access the storage device for the write transaction based on the configuration can include obtaining the second BW capability from a second entry in the table that indicated the second BW capability. The second entry can be generated during the calibration cycle that also monitored BW capabilities to access the storage device for write transactions.

Example 38. The method of example 28, the monitored read and write transactions to the storage device can

include sequential read and sequential write transactions to the storage device based on a data size for each transaction of the monitored read and write transaction being greater than 256 kilobytes.

Example 39. The method of example 28, the monitored read and write transactions to the storage device can include random read and random write transactions to the storage device based on a data size for each transaction of the monitored read and write transaction being less than 256 kilobytes.

It is emphasized that the Abstract of the Disclosure is provided to comply with 37 C.F.R. Section 1.72(b), requiring an abstract that will allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single example for the purpose of streamlining the disclosure. This method of disclosure is not to be interpreted as reflecting an intention that the claimed examples require more features than are expressly recited in each claim. Rather, as the following claims reflect, inventive subject matter lies in less than all features of a single disclosed example. Thus, the following claims are hereby incorporated into the Detailed Description, with each claim standing on its own as a separate example. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

### Claims

1. A computing platform comprising:

   a serial bus;
   a storage interface configured to communicatively couple to a storage device over the serial bus; and
   circuitry to execute an operating system that includes a storage driver, the storage driver to:

      detect that a storage device has communicatively coupled with the computing platform via the storage interface and that the storage device is in a mode of operation to enable a dynamic change of a configuration to access the storage device, the configuration to include a link width for the serial bus, a link speed for the serial bus, or a power state to operate the storage device;
      monitor access transactions to the storage device to determine a needed bandwidth (BW) to complete read transactions;
      determine a first BW capability to access the storage device for a read transaction based on the configuration;
      determine a first BW utilization factor (BUF) value based on dividing the needed BW to complete the read transactions by the first BW capability; and
      determine whether to cause a change to the configuration to access the storage device based on the first BUF value.

2. The computing platform of claim 1, further comprising the storage driver to:

      monitor the access transaction to the storage device to determine a needed BW to complete write transactions;
      determine a second BW capability to access the storage device for a write transaction based on the configuration;
      determine a second BUF value based on dividing the needed BW to complete the write transactions by the second BW capability; and
      determine whether to cause a change to the configuration to access the storage device based on the first BUF value or the second BUF value.

3. The computing platform of claim 2, further comprising the storage driver to:
   determine not to cause a change to the configuration of the storage device based on the first BUF value and the second BUF value being between 0.5 and 0.8.

4. The computing platform of claim 2, further comprising the storage driver to:

      determine that the first BUF value and the second BUF value are below 0.5; and

cause a change to the configuration of the storage device to a second configuration such that one or more of the link width, the link speed or the power state are set to lower levels that cause determined lowered BW capabilities for the read transaction and the write transaction such that newly determined BUF values for the read transactions and the write transactions will have new values between 0.5 and 0.8.

5. The computing platform of claim 2, further comprising the storage driver to:

determine that the first BUF value is less than 0.5 and the second BUF value is greater than 0.5 but less than 0.8;
cause a change to the configuration of the storage device to a second configuration such that one or more of the link width, the link speed or the power state are set to lower levels that cause determined lowered BW capabilities for the read transaction and the write transaction such that newly determined BUF values for the read transactions and the write transactions will have new values between 0.5 and 0.8.

6. The computing platform of claim 2, further comprising the storage driver to:

determine that the first BUF has a value greater than 0.8 and the second BUF value is greater than 0.5 but less than 0.8;
cause a change to the configuration of the storage device to a second configuration such that one or more of the link width, the link speed or the power state are set to higher levels that cause determined higher data BW capabilities for the read transaction and the write transaction such that newly determined BUF values for the read transactions and the write transactions will have new values between 0.5 and 0.8.

7. The computing platform of claim 2, wherein the storage interface is configured to operate according to a first specification by the Non-Volatile Memory Express (NVMe) work group to include the NVMe base specification, revision 2.0b and the serial bus is arranged to operate according to one or more specifications by the Peripheral Component Interconnect Special Interest Group (PCI-SIG) to include PCI Express (PCIe) Base specifications from revision 1.0 to revision 6.0.

8. The computing platform of claim 7, wherein the configuration to include the link width, the link speed, or the power state can include the link width to be based on one or more PCIe lanes, the link speed to be based on a revision of a PCIe Base specification from among revisions 1.0 to 6.0, and the power state to be based on NVMe power states, wherein a higher number of PCIe lanes, higher numbered revision, and/or lower power states cause determined higher BW capabilities for the read transaction and the write transaction.

9. The computing platform of claim 2, wherein the storage interface is configured to operate according to a plurality of specifications by the Joint Electronic Device Engineering Council (JEDEC) work group to include Universal Flash Storage (UFS), versions 1.0 to 4.0, and wherein the configuration to include the link width, the link speed, or the power state can include the link width to be based on one or more UFS lanes and the link speed to be based on a revision of a UFS specification from among revisions 1.0 to 4.0, wherein a higher number of UFS lanes and/or high numbered revision cause determined higher BW capabilities for the read transaction and the write transaction.

10. A method comprising:

detecting that a storage device coupled with a computing platform via a storage interface over a serial bus is in a mode of operation to dynamically change a configuration to access the storage device, the configuration to include a link width for the serial bus, a link speed for the serial bus, or a power state to operate the storage device;
monitoring access transactions to the storage device to determine a needed bandwidth (BW) to complete read transactions;
determining a first BW capability to access the storage device for a read transaction based on the configuration;
determining a first BW utilization factor (BUF) value based on dividing the needed BW to complete the read transactions by the first BW capability; and
determining whether to change the configuration to access the storage device based on the first BUF value.

11. The method of claim 10, further comprising:

monitoring the access transaction to the storage device to determine a needed BW to complete write transactions;
determining a second BW capability to access the storage device for a write transaction based on the configuration;

determining a second BUF value based on dividing the needed BW to complete the write transactions by the second BW capability; and

determining whether to change the configuration to access the storage device based on the first BUF value or the second BUF value.

12. The method of claim 11, further comprising:

determining that the first BUF value and the second BUF value are below 0.4; and

changing the configuration of the storage device to a second configuration such that one or more of the link width, the link speed or the power state are set to lower levels that cause determined lowered BW capabilities for the read transaction and the write transaction such that newly determined BUF values for the read transactions and the write transactions will have new values between 0.4 and 0.7.

13. The method of claim 11, wherein the storage interface is arranged to operate according to a first specification by the Non-Volatile Memory Express (NVMe) work group to include the NVMe base specification, revision 2.0b and the serial bus is arranged to operate according to one or more specifications by the Peripheral Component Interconnect Special Interest Group (PCI-SIG) to include PCI Express (PCIe) Base specifications from revision 1.0 to revision 6.0, and wherein the configuration to include the link width, the link speed, or the power state comprise the link width being based on one or more PCIe lanes, the link speed being based on a revision of a PCIe Base specification from among revisions 1.0 to 6.0, and the power state based on NVMe power states, wherein a higher number of PCIe lanes, higher numbered revision, and/or lower power states cause determined higher BW capabilities for the read transaction and the write transaction.

14. At least one machine readable medium comprising a plurality of instructions that in response to being executed by a system causes the system to carry out a method according to any one of claims 10 to 13.

15. An apparatus comprising means for performing the methods of any one of claims 10 to 13.

Computing Platform 100

Application(s) 120

OS 130

Storage Driver 132

BIOS 110

Processor 140

Memory 150

Storage Device 160

Controller 162

## FIG. 1

**Calibration Scheme <u>200</u>**

Storage Driver <u>132</u>
- Calibration Logic 232
- Monitor Logic 234
- Mode Logic 235
- BUF Logic 236
- BW Capability Table 238

Calibration Cycle <u>210</u>

Link Width Parameters 212
Link Speed Parameters 214
Power State Parameters 216

Storage Device <u>160</u>

Controller <u>162</u>
- Operating Parameters 220

Monitored BW Capabilities <u>240</u>

*FIG. 2*

EP 4 733 923 A1

# BW Capability Table 238

| Entry | BW Capability | Sequential Read Transaction Parameters | | |
|---|---|---|---|---|
| | | Link Width | Link Speed | Power State |
| 301 | Value 1 | x1 | Gen 4 | P0 |
| 302 | Value 2 | x2 | Gen 4 | P0 |
| 303 | Value 3 | x4 | Gen 4 | P0 |
| 304 | Value 4 | x1 | Gen 5 | P0 |
| 305 | Value 5 | x2 | Gen 5 | P0 |
| 306 | Value 6 | x4 | Gen 5 | P0 |
| 307 | Value 7 | x1 | Gen 6 | P0 |
| 308 | Value 8 | x2 | Gen 6 | P0 |
| 309 | Value 9 | x4 | Gen 6 | P0 |
| 310 | Value 10 | x1 | Gen 4 | P1 |
| 311 | Value 11 | x1 | Gen 4 | P2 |
| 312 | Value 12 | x1 | Gen 5 | P1 |
| 313 | Value 13 | x1 | Gen 5 | P2 |
| 314 | Value 14 | x1 | Gen 6 | P1 |
| 315 | Value 15 | x1 | Gen 6 | P2 |
| 316 | Value 16 | x2 | Gen 4 | P1 |
| 317 | Value 17 | x2 | Gen 4 | P2 |
| 318 | Value 18 | x2 | Gen 5 | P1 |
| 319 | Value 19 | x2 | Gen 5 | P2 |
| 320 | Value 20 | x2 | Gen 6 | P1 |
| 321 | Value 21 | x2 | Gen 6 | P2 |
| 322 | Value 22 | x4 | Gen 4 | P1 |
| 323 | Value 23 | x4 | Gen 4 | P2 |
| 324 | Value 24 | x4 | Gen 5 | P1 |
| 325 | Value 25 | x4 | Gen 5 | P2 |
| 326 | Value 26 | x4 | Gen 6 | P1 |
| 327 | Value 27 | x4 | Gen 6 | P2 |

## FIG. 3

# Modes **400**

| System Performance Mode | Storage Configuration |
|---|---|
| Best Performance | Highest performance configuration. Highest link speed, link width and power state. |
| Battery Save | User/OEM determined configuration of link width, link speed and power state. |
| Balanced | User/OEM determined configuration; dynamic option available to be enabled. When in Green, Eco, or sustainability mode, dynamic option becomes mandatory. |

# *FIG. 4*

**Flow 500**

```
┌─────────────────────┐
│ Connect Storage Device │
│         510          │
└─────────────────────┘
          │
          ▼
┌─────────────────────┐
│ Gather operating details of │
│  connected storage device  │
│          515          │
└─────────────────────┘
          │
          ▼
      ╱╲
     ╱    ╲          No      ┌──────────────────────────┐
    ╱ BW capability╲ ─────────▶│ Implement calibration scheme for │
    ╲data available ?╱         │  read and write transactions  │
     ╲    520    ╱             │            525            │
      ╲╱                       └──────────────────────────┘
       │ Yes                              │
       │                                  ▼
       │              ┌──────────────────────────┐
       │              │ Populate entries in BW capability │
       │◀─────────────│ table. Mark calibration as complete │
       ▼              │            530            │
┌──────────────────────────┐   └──────────────────────────┘
│ Check OS performance slider location │
│ to determine system performance mode │
│            535            │
└──────────────────────────┘
          │
          ▼
      ╱╲                    ╱╲                      ╱╲
     ╱    ╲    No          ╱    ╲      No          ╱    ╲     No
    ╱  Best  ╲ ──────────▶╱ Battery ╲ ──────────▶╱Balanced?╲ ──────▶
    ╲Performance?╱         ╲  Save?  ╱            ╲   565   ╱
     ╲   540   ╱            ╲  550   ╱             ╲╱
      ╲╱                     ╲╱                     │ Yes
       │ Yes                  │ Yes                 ▼
       ▼                      ▼                 ╱╲
┌──────────────────┐   ┌──────────────────┐   ╱    ╲
│ Highest performance config.│ │ Least power config. per │  ╱ Green/  ╲   No
│   per BW capability table   │ │   BW capability table   │ ╲Sustainability/╱ ──────▶
│          545          │   │          555          │  ╲ Eco mode ╱
└──────────────────┘   └──────────────────┘   ╲enabled?╱
       │                      │                 ╲  570  ╱
       │          ┌──────────────────┐           ╲╱
       │          │  Configuration   │            │ Yes
       └─────────▶│    Complete      │◀───────────┤
                  │        560       │            ▼
                  └──────────────────┘      ╭──────────╮
                                            │ Flow 600 │
                                            ╰──────────╯
```

*FIG. 5*

EP 4 733 923 A1

**Flow 600**

Green/Sustainability/Eco mode enabled. Begin sampling window
610

↓

Read submission & confirmation queue contents
615

↓

Calculate random & sequential BW requirements for read & write transaction types
620

↓

Calculate BUF for each type of read/write transaction for current configuration
625

↓

All BUF btwn 0.5 - 0.8?
630

Yes →

No ↓

Determine lower storage config using BW cap. table
640

← Yes

All BUF <0.5?
635

No ↓

Any BUF > 0.8?
645

No →

Determine storage config. Priority of change:
1. link width change
2. power state change
3. link speed change
650

Yes ↓

Determine storage config. Priority of change:
1. link width change
2. link speed change
3. power state change
655

↓

Sampling window timeout?
660

No →

Yes ↓

**FIG. 6**

# *Apparatus 700*

## Circuitry 740

### OS 130

Storage Driver 132

Calibration Logic 232

Mode Logic 235

Monitor Logic 234

BUF Logic 236

BW Capability Table 238

Storage Interface 710

Mode & Config. Detection 705

Monitored R/W Transactions 715

Config. Change Information 725

## FIG. 7

## 800

DETECT THAT A STORAGE DEVICE COUPLED WITH A COMPUTING PLATFORM VIA A STORAGE INTERFACE OVER A SERIAL BUS IS IN A MODE OF OPERATION TO DYNAMICALLY CHANGE A CONFIGURATION TO ACCESS THE STORAGE DEVICE, THE CONFIGURATION TO INCLUDE A LINK WIDTH FOR THE SERIAL BUS, A LINK SPEED FOR THE SERIAL BUS, OR A POWER STATE TO OPERATE THE STORAGE DEVICE
802

MONITOR ACCESS TRANSACTIONS TO THE STORAGE DEVICE TO DETERMINE A NEEDED BW TO COMPLETE READ TRANSACTIONS OR A NEEDED BW TO COMPLETE WRITE TRANSACTIONS
804

DETERMINE A FIRST BW CAPABILITY TO ACCESS THE STORAGE DEVICE FOR A READ TRANSACTION BASED ON THE CONFIGURATION
806

DETERMINE A FIRST BUF VALUE BASED ON DIVIDING THE NEEDED BW TO COMPLETE THE READ TRANSACTIONS BY THE FIRST BW CAPABILITY
808

DETERMINE A SECOND BW CAPABILITY TO ACCESS THE STORAGE DEVICE FOR A WRITE TRANSACTION BASED ON THE CONFIGURATION
810

DETERMINE A SECOND BUF VALUE BASED ON DIVIDING THE NEEDED BW TO COMPLETE THE WRITE TRANSACTIONS BY THE SECOND BW CAPABILITY
812

CAN DETERMINE WHETHER TO CHANGE THE CONFIGURATION TO ACCESS THE STORAGE DEVICE BASED ON THE FIRST BUF VALUE OR THE SECOND BUF VALUE
814

## FIG. 8

**Storage Medium 900**

Computer Executable
Instructions for 800

# FIG. 9

## EUROPEAN SEARCH REPORT

Application Number

EP 25 20 1547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/147254 A1 (KANG YOUNGSAN [KR] ET AL) 12 May 2022 (2022-05-12) * figures 2,9,11 * * paragraph [0040] - paragraph [0067] * * paragraph [0112] - paragraph [0161] * ----- | 1-15 | INV. G06F3/06 |
| A | US 2022/114117 A1 (LEE YOUNG MIN [KR] ET AL) 14 April 2022 (2022-04-14) * figures 10-12 * * paragraph [0074] - paragraph [0104] * ----- | 1-15 | |

TECHNICAL FIELDS
SEARCHED      (IPC)

G06F

The present search report has been drawn up for all claims

| Place of search | Date of completion of the search | Examiner |
|---|---|---|
| The Hague | 27 January 2026 | Alliot, Sylvain |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 1547

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2026

| Patent document cited in search report | | Publication date | Patent family member(s) | | Publication date |
|---|---|---|---|---|---|
| US 2022147254 | A1 | 12-05-2022 | CN | 114490481 A | 13-05-2022 |
| | | | DE | 102021127003 A1 | 12-05-2022 |
| | | | KR | 20220064786 A | 19-05-2022 |
| | | | US | 2022147254 A1 | 12-05-2022 |
| US 2022114117 | A1 | 14-04-2022 | CN | 114300010 A | 08-04-2022 |
| | | | EP | 3982244 A1 | 13-04-2022 |
| | | | KR | 20220046948 A | 15-04-2022 |
| | | | US | 2022114117 A1 | 14-04-2022 |

EPO FORM P0459

For more details about this annex : see Official Journal of the European Patent Office, No. 12/82